# EUROPEAN PATENT APPLICATION

(11) **EP 2 787 259 A1**
(43) Date of publication of application: **08.10.2014**
(21) Application number: 12865114.8
(22) Date of filing: 26.12.2012
(51) Int. Cl.: F16K 17/10

(54) **RELIEF VALVE**

(30) Priority: 13.01.2012 JP 2012005085
(71) Applicant: Kayaba Industry Co., Ltd., Tokyo 105-6111 (JP)
(72) Inventor: YOSHIDA, Nobuyoshi, Tokyo 105-6111 (JP); ONO, Junichi, Tokyo 105-6111 (JP)
(74) Representative: Grünecker, Kinkeldey, Stockmair & Schwanhäusser
(86) International application number: PCT/JP2012/083735
(87) International publication number: WO 2013/105442

(57) **Abstract**

A relief valve includes an adjusting piston which is slidable by the action of a pilot pressure, a pilot poppet on which a spring force of a setting spring adjusted by a sliding movement of the adjusting piston acts in a valve closing direction, a spring chamber into which a spring for exerting a spring force opposing the pilot pressure is incorporated, and an air vent hole which is formed in the spring chamber and exposes the spring chamber to outside.

## Description

### TECHNICAL FIELD

The present invention relates to a relief valve for opening and closing a main poppet according to opening and closing of a pilot poppet.

### BACKGROUND ART

JP2001-343082A discloses a relief valve with a built-in anti-void mechanism. A valve case of this relief valve is fitted to a device main body. A valve sleeve is slidably incorporated into the valve case. A poppet portion formed on the tip of the valve sleeve is pressed into contact with a seat portion of a high-pressure port.

A main poppet is incorporated into the valve sleeve. A piston member slidably penetrates through a central part of the main poppet. A tip part of a guide plug is inserted into the valve sleeve. The tip of the guide plug faces the main poppet in the valve sleeve. An inner space is defined between facing portions of the main poppet and the tip of the guide plug.

A pilot passage is formed to penetrate through the center of the piston member. The high-pressure port and the inner space communicate via the pilot passage.

The pilot poppet is incorporated into the guide plug. The pilot poppet is formed with a rod portion. The axial center of the rod portion and that of the pilot passage coincide. When the piston member moves against a spring force of a spring, the pilot passage is closed by the rod portion.

A spring force of a setting spring provided in the guide plug acts on the pilot poppet. If a hydraulic force due to a pressure in the high-pressure port exceeds the spring force of the setting spring, the pilot poppet is opened and pressure oil in the inner space is drained via a drain chamber and a low-pressure port.

### SUMMARY OF INVENTION

A spring load of the setting spring is adjusted by an adjusting piston held in contact with an end part of the setting spring opposite to the pilot poppet. The adjusting piston is slidably housed in a sleeve. The adjusting piston is pressed against a bottom portion of the sleeve by a spring. The spring is housed in a spring chamber defined in the sleeve.

A pilot chamber is defined between the adjusting piston and the bottom portion, and the adjusting piston slides in an axial direction against the spring force of the spring due to a pilot pressure supplied to the pilot chamber.

In the above relief valve, the spring chamber is defined in the sleeve and an open end of the sleeve is closed by a plug. Thus, when air is trapped, this air cannot be evacuated. This makes it difficult to move the adjusting piston if air is trapped in the spring chamber, for example, when the pilot pressure is introduced into the pilot chamber to adjust the position of the adjusting piston. Thus, there is a possibility of being unable to accurately control a set pressure of the relief valve.

This invention aims to provide a relief valve capable of accurately controlling a set pressure without air being trapped in a spring chamber.

According to one aspect of this invention, a relief valve with an adjusting piston which is slidable by the action of a pilot pressure, a pilot poppet on which a spring force of a setting spring adjusted by a sliding movement of the adjusting piston acts in a valve closing direction, and a spring chamber into which a spring for exerting a spring force opposing the pilot pressure is incorporated is provided. The relief valve includes an air vent hole which is formed in the spring chamber and exposes the spring chamber to outside.

The details as well as other features and advantages of this invention are set forth in the remainder of the specification and are shown in the accompanying drawings.

### BRIEF DESCRIPTION OF DRAWINGS

FIG. 1 is a sectional view showing a relief valve according to an embodiment of the present invention, and
FIG. 2 is a sectional view showing a relief valve in a comparative example.

### DESCRIPTION OF EMBODIMENT

Hereinafter, an embodiment of the present invention is described with reference to the drawings.

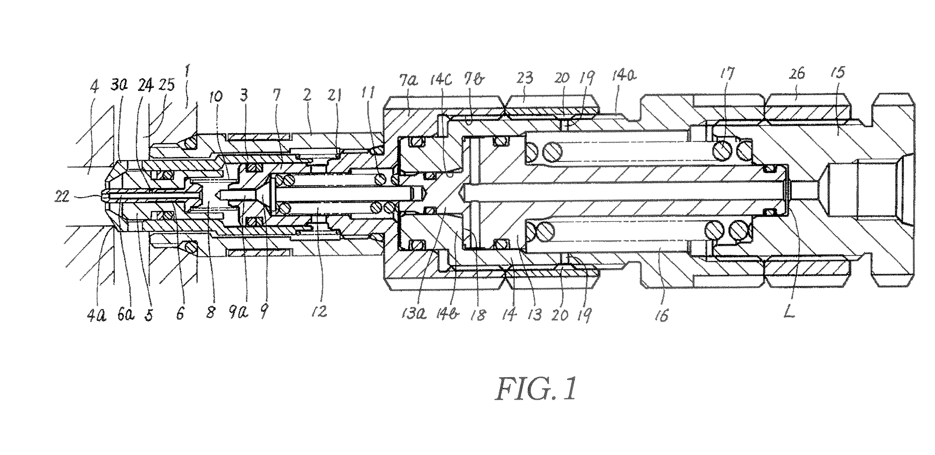

FIG. 1 is a sectional view showing a relief valve in the present embodiment. The relief valve includes a built-in anti-void mechanism. A valve case 2 is fitted to a device main body 1 of the relief valve. A valve sleeve 3 is slidably incorporated into the valve case 2. A poppet portion 3a is formed on the tip of the valve sleeve 3 and pressed into contact with a seat portion 4a of a high-pressure port 4. A spring force of a return spring 21 interposed between the valve sleeve 3 and a guide plug 7 acts on the valve sleeve 3.

A main poppet 5 is incorporated into the valve sleeve 3. A piston member 6 slidably penetrates through a central part of the main poppet 5. A pilot passage 6a extending along an axis line penetrates through the piston member 6. An aperture portion 22 is formed in a tip part of the pilot passage 6a and the high-pressure port 4 and an inner space 8 communicate via the pilot passage 6a.

The aperture portion 22 moves the piston member 6 against a spring 10 while maintaining a difference between pressures before and after the aperture portion 22 when a pilot poppet 9 is opened and pressure oil in the inner space 8 flows into a drain chamber 12.

The guide plug 7 is inserted into the valve sleeve 3. A tip part of the guide plug 7 faces the main poppet 5 in the valve sleeve 3. The inner space 8 is defined between facing portions of the main poppet 5 and the tip part of the guide plug 7.

The pilot poppet 9 is incorporated into the guide plug 7. The pilot poppet 9 is formed with a rod portion 9a. The axial center of the rod portion 9a and that of the pilot passage 6a coincide. When the piston member 6 moves against a spring force of the spring 10, the pilot passage 6a is closed by the rod portion 9a.

A spring force of a setting spring 11 provided in the guide plug 7 acts on the pilot poppet 9. If a hydraulic force due to a pressure in the high-pressure port 4 exceeds the spring force of the setting spring 11, the pilot poppet 9 is opened and the pressure oil in the inner space 8 is drained via the drain chamber 12 and a low-pressure port 25.

A spring load of the setting spring 11 is adjusted by the movement position of the adjusting piston 13. The adjusting piston 13 is incorporated as follows.

The guide plug 7 includes a large-diameter portion 7a provided on an end part opposite to the inner space 8 and an internally threaded portion 7b formed on the inner periphery of the large-diameter portion 7a. A sleeve 14 having an externally threaded portion 14a formed on the outer periphery is threadably engaged with the internally threaded portion 7b.

The adjusting piston 13 is slidably incorporated into the sleeve 14. A spring chamber 16 is defined between a plug 15 for closing an end part of the sleeve 14 and the adjusting piston 13, and a spring 17 is provided in the spring chamber 16. The adjusting piston 13 is pressed into contact with a bottom portion 14b of the sleeve 14 by a spring force of the spring 17.

Accordingly, a space between the adjusting piston 13 pressed into contact with the bottom portion 14b and the plug 15 is a movable range L of the adjusting piston 13.

A projection 13a is formed on the tip of the adjusting piston 13 incorporated as described above. The projection 13a is located in a through hole 14c formed in the bottom portion 14b of the sleeve 14. The tip of the projection 13a is in contact with the setting spring 11.

When the large-diameter portion 7a of the guide plug 7 and the sleeve 14 are relatively rotated, the sleeve 14 moves relative to the guide plug 7 according to the pitch of the internally threaded portion 7b and the externally threaded portion 14a. The adjusting piston 13 moves according to the movement of the sleeve 14 and an initial load of the setting spring 11 is specified according to the movement position of the adjusting piston 13.

It should be noted that a positioning nut 23 is threadably fitted on the externally threaded portion 14a of the sleeve 14 to specify the position of the guide plug 7. In this way, relative positions of the guide plug 7 and the sleeve 14 are held. Further, a positioning nut 26 is threadably fitted on the plug 15 to specify the position of the sleeve 14.

A pilot chamber 18 is defined between the adjusting piston 13 and the bottom portion 14b, and a pilot pressure is introduced into the pilot chamber 18 from a predetermined pilot pressure source. In this way, the spring load can be adjusted by moving the adjusting piston 13 within the movable range L against the spring 17 and deflecting the setting spring 11.

Further, the aperture portion 22 maintains the difference between pressures before and after the aperture portion 22, and moves the piston member 6 against the spring 10 when the pilot poppet 9 is opened and the pressure oil in the inner space 8 flows into the drain chamber 12.

A small hole 24 introduces the pressure oil introduced into the pilot passage 6a to a clearance between the piston member 6 and the main poppet 5 when the pilot passage 6a of the piston member 6 is closed by the rod portion 9a.

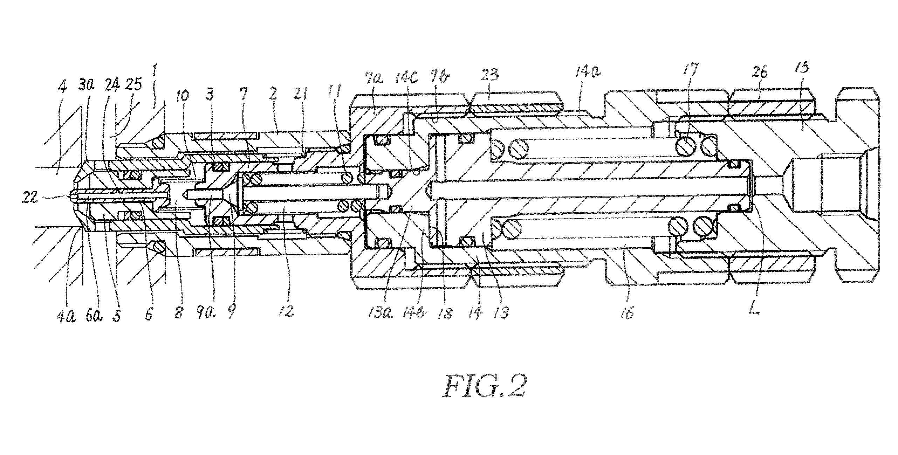

Here, since the spring chamber 16 is defined in the sleeve 14 and the open end of the sleeve 14 is closed by the plug 15 as shown in a comparative example of FIG. 2, if air is trapped in the spring chamber 16, this air cannot be evacuated. This makes it difficult to move the adjusting piston 13 if air is trapped in the spring chamber 16, for example, when the pilot pressure is introduced into the pilot chamber 18 to adjust the position of the adjusting piston 13. Thus, there is a possibility of being unable to accurately control a set pressure of the relief valve.

Accordingly, as shown in FIG. 1, the sleeve 14 is provided with an air vent hole 19 formed at a position corresponding to the positioning nut 23 and a recess 20 formed by removing threads around the air vent hole 19 in advance in the present embodiment.

Since the threads of the externally threaded portion 14a around the air vent hole 19 are removed in advance, the production of shavings corresponding to the threads can be suppressed in boring the air vent hole 19.

The operation of the relief valve is described below.

When a hydraulic force generated by a pressure in the high-pressure port 4 becomes equal to or larger than the spring force of the setting spring 11, the pressure oil in the high-pressure port 4 is introduced into the inner space 8 through the pilot passage 6a. Thus, the pilot poppet 9 is opened. When the pilot poppet 9 is opened, the pressure oil in the inner space 8 flows into the drain chamber 12. Thus, the difference between pressures before and after the aperture portion 22 of the piston member 6 increases and the piston member 6 moves against the spring 10.

When the piston member 6 moves and comes into contact with the rod portion 9a of the pilot poppet 9, the pilot passage 6a is closed. When the pilot passage 6a is closed, the pressure oil in the pilot passage 6a flows out into the clearance between the piston member 6 and the main poppet 5 through the small hole 24 formed in the piston member 6 and flows into the inner space 8.

Since the differential pressure between the high-pressure port 4 and the inner space 8 increases in this way, the main poppet 5 is opened and the pressure oil in the high-pressure port 4 flows into the low-pressure port 25.

On the other hand, when the pressure in the high-pressure port 4 becomes lower than that in the low-pressure port 25, the valve sleeve 3 moves against the return spring 21 due to a difference between a pressure receiving area in the inner space 8 and a pressure receiving area of the seat portion 4a. Since this causes the seat portion 4a to be opened, the occurrence of a cavitation phenomenon is prevented.

According to the above embodiment, the following effect can be achieved.

Since the spring chamber 16 is exposed to outside via the air vent hole 19, air getting trapped in the spring chamber 16 can be prevented. This can prevent the adjusting piston 13 from becoming difficult to move due to the air trapped in the spring chamber 16. Therefore, the set pressure of the relief valve can be more accurately controlled.

Embodiments of this invention were described above, but the above embodiments are merely examples of applications of this invention, and the technical scope of this invention is not limited to the specific constitutions of the above embodiments.

This application claims priority based on Japanese Patent Application No. 2012-005085 filed with the Japan Patent Office on January 13, 2012, the entire contents of which are incorporated into this specification.

## Claims

1. A relief valve with an adjusting piston which is slidable by the action of a pilot pressure, a pilot poppet on which a spring force of a setting spring adjusted by a sliding movement of the adjusting piston acts in a valve closing direction, and a spring chamber into which a spring for exerting a spring force opposing the pilot pressure is incorporated, comprising:
an air vent hole which is formed in the spring chamber and exposes the spring chamber to outside.

2. The relief valve according to claim 1, comprising:
a main poppet which opens and closes a high-pressure port;
a valve sleeve in which the main poppet is slidably provided;
a guide plug which is relatively movably inserted into the valve sleeve and forms an inner space between the main poppet and the guide plug;
a piston member which slidably penetrates through the main poppet and includes a pilot passage allowing communication between the high-pressure port and the inner space;
a drain chamber which is formed in the guide plug to include the setting spring and the communication of which with the inner space is opened and closed by the pilot poppet;
a sleeve which has an externally threaded portion formed on the outer periphery so as to be threadably fitted on the guide plug having an internally threaded portion formed on the inner periphery and into which the adjusting piston is incorporated; and
a positioning nut which is threadably fitted on the externally threaded portion of the sleeve to specify an axial position of the sleeve;
wherein:
the pilot poppet is opened and the main poppet is opened to introduce pressure oil in the high-pressure port to a low-pressure port when a pressure in the high-pressure port becomes equal to or higher than a set pressure;
relative positions of the setting spring and the adjusting piston in an axial direction change to adjust the spring force of the setting spring according to a change in axial positions of the guide plug and the sleeve; and
the air vent hole is provided at a position of the sleeve where the positioning nut is tightened and threads of the externally threaded portion are removed in advance.
